# EUROPÄISCHE PATENTSCHRIFT

(11) **EP 1 122 272 B1**
(45) Veröffentlichungstag und Bekanntmachung des Hinweises auf die Patenterteilung: **14.01.2009**
(21) Anmeldenummer: 01101591.4
(22) Anmeldetag: 25.01.2001
(51) Int. Cl.: C08G 18/78, C08G 18/32, C08G 18/79

(54) **Lagerstabile Polyisocyante**
Storage stable polyisocyanates
Polyisocyanates stables au stockage

(30) Priorität: 05.02.2000 DE 10005228; 21.11.2000 DE 10057603
(43) Veröffentlichungstag der Anmeldung: 08.08.2001
(73) Patentinhaber: BASF SE, 67056 Ludwigshafen (DE)
(72) Erfinder: Bruchmann, Bernd, Dr., 67251 Freinsheim (DE); Mohrhardt, Günter, 67346 Speyer (DE); Renz, Hans, Dr., 67149 Meckenheim (DE); Jähme, Joachim, Dr., 67240 Bobenheim-Roxheim (DE)

(56) Entgegenhaltungen:
- EP-A- 0 566 037
- DE-A- 4 229 183
- US-A- 5 789 519

## Beschreibung

Die vorliegende Erfindung betrifft Mischungen enthaltend
a) Polyisocyanate (Polyisocyanate A), enthaltend Struktureinheiten, ausgewählt aus der Gruppe Isocyanurat und Biuret, abgeleitet von aliphatischen oder cycloaliphatischen Diisocyanaten (Diisocyanate C)
b) von den Polyisocyanaten A verschiedene Polyisocyanate (Polyisocyanate B), enthaltend Struktureinheiten, ausgewählt aus der Gruppe Allophanat und Urethan, abgeleitet von
b1) aliphatischen oder cycloaliphatischen Diisocyanaten (Polyisocyanate C) und
b2) mehrwertigen aliphatischen oder cycloaliphatischen Alkoholen (Alkohole A)
wobei das molare Verhältnis der Polyisocyanate A zu den Polyisocyanaten B 200: 1 bis 5:1 beträgt.

Vernetzende Polyisocyanate und Bindemittelkomponenten mit gegenüber Isocyanaten reaktiven Gruppen sind z.B. in Form von 2-K-Lakken allgemein bekannt (vgl. Kunststoff Handbuch, Band 7, Polyurethane, 2. Auflage, 1993, Carl Hanser Verlag München Wien, S. 599 bis 642; M. Bock, Polyurethane für Lacke und Beschichtungen, Vincentz-Verlag, Hannover, 1999 und Journal für praktische Chemie, 336 (1994) 185-200). Diese 2-Komponenten-Beschichtungsmittel enthalten als Bindemittel beispielsweise ein polymeres Polyol und als Vernetzerkomponente (Härter) eine Verbindung mit mehreren freien Isocyanatgruppen.

Die Gebrauchseigenschaften von Lacken, deren polymere Bindemittel mit den Isocyanaten vernetzt wurden, sind gegenüber Systemen mit niedermolekularen Bindemitteln deutlich verbessert. Dies betrifft insbesondere Gebrauchseigenschaften wie
- Unempfindlichkeit gegenüber mechanischer Beanspruchung wie Zug, Dehnung, Schlag oder Abrieb,
- Resistenz gegenüber Feuchtigkeit (z.B. in Form von Wasserdampf) und verdünnten Chemikalien,
- Beständigkeit gegenüber Umwelteinflüssen wie Temperaturschwankungen und UV-Strahlung,
- hoher Glanz der beschichteten Oberflächen,
- hohe Transparenz.

Es wird erwartet, daß die Härter nicht nur den ausgehärteten Lakken die vorgenannten Gebrauchseigenschaften verleihen, sondern auch die verarbeitungstechnischen Eigenschaften der Lacke vor deren Auftrag verbessern oder zumindest möglichst wenig beeinträchtigen.

Damit die Lacke problemlos mit üblichen Verfahren, z.B. durch Aufsprühen auf die zu beschichtende Oberfläche, aufgetragen werden können, sollen die Lacke eine begrenzte Viskosität aufweisen. Lacke auf Basis von 2-Komponenten-Beschichtungsmitteln enthalten deshalb üblicherweise Lösungsmittel. Der hohe Lösungsmittelgehalt dieser Lacke bereitet jedoch Probleme, da die Verarbeiter der Lacke technisch aufwendige Maßnahmen ergreifen müssen, um zu vermeiden, daß die Lösungsmittel, die beim Auftrag und Trocknen der Lacke freigesetzt werden, in die Atmosphäre gelangen. Es wurden deshalb Härter gesucht, die die Viskosität der Bindemittel-haltigen Komponente möglichst wenig erhöhen oder sogar besser noch erniedrigen. Selbstverständlich dürfen diese Härter selbst bei Raumtemperatur keine nennenswerte Flüchtigkeit aufweisen, wie dies bei handelsüblichen monomeren Isocyanaten wie Hexamethylendiisocyanat oder Isophorondiisocyanat der Fall ist. Weiterhin dürfen die Härter auch bei längerer Lagerung ihre Viskositäten nicht erhöhen, da dies für den Anwender eine weitere Zugabe von Lösemittel bei der Herstellung der Lackformulierung nach sich ziehen würde.

Weiterhin sollen die 2-Komponenten-Beschichtungsmittel nach der Applikation möglichst rasch aushärten, so daß die beschichteten Gegenstände nach dem Auftrag rasch weiterverarbeitet oder benutzt werden können.

Produkte, die dieses Eigenschaftsprofil in einem zumindest befriedigenden Umfang aufweisen, sind z.B. Allophanateinheiten tragenden Polyisocyanate, die aus der EP-A- 303150 bekannt sind. Polyisocyanate mit Isocyanurateinheiten sind z.B. aus der EP-A-0017998 und der US 4015155 bekannt.

Diese Polyisocyanate sind jedoch noch verbesserungsbedürftig, was die Lagerstabilität insbesondere bei Wärmelagerung angeht. Bei längerer Lagerungwerden die Produkte viskoser, trüben ein, bilden Flocken oder gelieren.

Die Aufgabe der vorliegenden Erfindung bestand somit darin, ein Polyisocyanat mit dem vorgenannten Eigenschaftsprofil bereitzustellen, welches sich längere Zeit lagern läßt, ohne sich in seinen Eigenschaften wesentlich zu verändern.

Demgemäß wurden die eingangs definierten Mischungen und Verfahren zu deren Herstellung, 2-Komponenten-Beschichtungsmittel, die diese Mischungen enthalten sowie Gegenstände, die mit diesen 2-Komponenten-Beschichtungsmitteln beschichtet sind, gefunden.

Die Polyisocyanate A sind für sich genommen bekannt. Sie enthalten bevorzugt 1, 2 oder 3 Struktureinheiten, ausgewählt aus der Gruppe Isocyanurat und Biuret. Als Polyisocyanate C, von denen sich die Polyisocyanate A ableiten, kommen insbesondere die der allgemeinen Formel (I) OCN-R¹-NCO in Betracht, bei denen R¹ eine Alkylen- oder Cycloalkyleneinheit mit 4 bis 20 Kohlenstoffatomen ist, die sich bevorzugt durch Abstraktion der NCO-Gruppen von Hexamethylendiisocyanat (HDI) oder Isophorondiisocyanat (IPDI) ableitet.

Besonders bevorzugt sind folgende Polyisocyanate A:
I. Isocyanuratgruppen aufweisende Polyisocyanate von aliphatischen, oder cycloaliphatischen Diisocyanaten. Besonders bevorzugt sind hierbei die entsprechenden Isocyanato-Isocyanurate auf Basis von Hexamethylendiisocyanat (HDI) oder Isophorondiisocyanat (IPDI). Bei den vorliegenden Isocyanuraten handelt es sich insbesondere um einfache Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring (z.B. 2 oder 3 davon) aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
   Vor allem kommen als Verbindungen Isocyanurate der allgemeinen Formel (IVa) 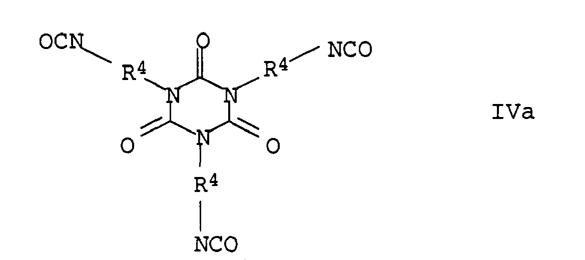 oder die sich davon ableitenden oligomeren Formen in Betracht, bei denen R⁴ die gleiche Bedeutung wie R¹ in Polyisocyanat A hat.
II. Biuretgruppen aufweisende Polyisocyanate mit aliphatisch oder cycloaliphatisch gebundenen Isocyanatgruppen, deren Herstellung z.B. in H.J. Laas et al., J. prakt. Chem. 336 (1994) 185-200, oder der EP-A-809663 beschrieben ist (Polyisocyanate AII). Dies sind insbesondere solche, die sich von IPDI sowie Bis (4-isocyanatocyclohexyl)methan (HMDI) ableiten. Besonders bevorzugt ist insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 10 bis 30 Gew.-%, insbesondere von 18 bis 25 Gew.-% und eine mittlere NCO-Funktionalität von 2,8 bis 4,5 auf.

Bei den Biuretisierungsmitteln, von denen sich die Biuretgruppen aufweisende Polyisocyanate A ableiten, handelt es sich um Wasser, Amin und eine Wasser generierende Substanz. Geeignete wassergenerierende Substanzen sind zum Beispiel einwertige tertiäre Alkohole wie tert-Butanol, iso-Butanol oder Ionenaustauscher.

Die Polyisocyanate B sind ebenfalls für sich bereits bekannte Verbindungen.

Sie leiten sich bevorzugt von den gleichen Polyisocyanaten C ab, die vorstehend beschrieben sind, besonders bevorzugt von HMDI, HDI und IPDI.

Bezüglich der Alkohole A können alle aliphatischen oder cycloaliphatischen mehrwertigen Alkohole eingesetzt werden. Bevorzugt handelt es sich um solche der allgemeinen Formel (II) HO-R²-OH, in der R² eine Alkylen- oder Cycloalkyleneinheit mit 2 bis 20 Kohlenstoffatomen ist, die ggf. durch Sauerstoffatome unterbrochen ist und bei der ggf. 1 bis 4 Wasserstoffatome durch C₁- bis C₁₂-Alkylreste substituiert sind. Besonders bevorzugt sind verzweigte Diole, wie Propylenglykol, 1,2- und 1,3-Butandiol, 2,2,4,4-Tetramethyl-1,3-cyclobutandiol, 2-Methyl-1,4-butandiol, 3-Methyl-1,3-butandiol, 1,2- und 1,3-Pentandiol, 2-Methyl-2,4-pentandiol, 3-Methyl 1,5-pentandiol, 2,4-Dimethyl-2,4-pentandiol, 2,4-Dimethyl-1,5-pentandiol, 2,2,4-Trimethyl-1,3-pentandiol, 1,2-, 1,3- und 1,4-Hexandiol, 2-Ethyl-1,3-hexandiol, 2,5-Dimethyl-2,5-hexandiol, Dipropylenglykol, Tripropylenglykol, Neopentylglykol, Hydroxypivalinsäureneopentylglykolester, besonders bevorzugt werden verwendet Neopentylglykol, Hydroxypivalinsäure-neopentylglykolester, 2,2,4-Trimethyl-1,3-pentandiol, 2-Ethyl-1,3-hexandiol, 2,4-Diethyl-1,5-octandiol oder deren Gemische.

Bevorzugte Polyisocyanats B sind solche der allgemeinen Formel (III), 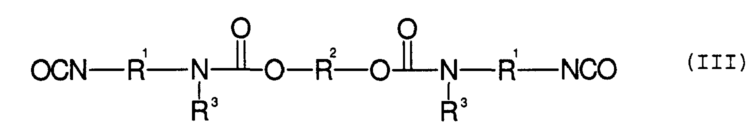 in der
- R¹: die gleiche Bedeutung wie in der allgemeinen Formel I,
- R²: die gleiche Bedeutung wie in der allgemeinen Formel II,
- R³: Wasserstoff oder ein Rest -CO-NH-R¹-NCO bedeutet, wobei R¹ die gleiche Bedeutung wie in der allgemeinen Formel I hat, mit der Maßgabe, dass mindestens ein Rest R³ nicht Wasserstoff bedeutet.

Bevorzugt beträgt das molare Verhältnis der Polyisocyanate A zu den Polyisocyanaten B 100: 1 bis 20:1.

Die erfindungsgemäßen Mischungen können in geringen Anteilen, im allgemeinen in Mengen von 0,5 bis 10 Gew.-%, bezogen auf die Polyisocyanate A, auch von einwertigen primären oder sekundären C₁- bis C₂₀-Alkylalkoholen abgeleitete Urethan- und Allophanatgruppen aufweisende Polyisocyanate enthalten. Als einwertige Alkohole kommen zum Beispiel aliphatische oder cycloaliphatische Alkohole wie Methanol, Ethanol, Propanol, Isopropanol, n-Butanol oder 2-Ethylhexanol in Betracht.

Die erfindungsgemäßen Mischungen lassen sich nach verschiedenen Verfahren herstellen:

Nach der Variante A geht man so vor, daß man das Polyisocyanat B herstellt, indem man
(A1) Diisocyanate C und Alkohole A in einem molaren Mischungsverhältnis von 200 : 1 bis 5:1, bevorzugt 100:1 bis 20:1 ggf. in Gegenwart von Katalysatoren, die die Bildung von Allophanaten und Urethanen beschleunigen, umsetzt,
(A2) die Katalysatoren gegebenenfalls desaktiviert und
(A3) gegebenenfalls nicht umgesetztes Diisocyanat C entfernt und
(A4) Polyisocyanat B anschließend mit einem Polyisocyanat A in den in Anspruch 1 angegebenen Mengenverhältnissen abmischt.

Die Umsetzung in Schritt A1 kann nach allgemein bekannten Methoden vollzogen werden und unterscheidet sich, abgesehen von dem zu beachtenden molaren Mischungsverhältnis der Diisocyanate C zu Alkohole A, nicht von der Herstellung der allgemein bekannten, von einwertigen Alkoholen abgeleiteten Allophanate, wie sie aus der EP-A-303150 oder EP-A-524501 bekannt sind. Das gleiche gilt für Schritt A2. Die Entfernung nicht umgesetzten Isocyanats erfolgt bevorzugt unter Vakuum in einem Dünnschichtverdampfer (Schritt A3). Die Abmischung der Polyisocyanate A und B ist unkritisch (Schritt A4) .

Praktischeweise geht man im allgemeinen jedoch so vor, dass man die Reaktionsführung so vornimmt, dass die Polyisocyanate B und die Polyisocyanate A in einem Reaktionsschritt gebildet werden (Varianten B und C).

Bei der Variante B werden vor allem solche erfindungsgemäßen Mischungen gebildet, bei denen das Polyisocyanat A vorwiegend Isocyanurateinheiten aufweist. Hierzu geht man so vor, dass man
(B1) Diisocyanate C und Alkohole A in einem molaren Mischungsverhältnis von 200 : 1 bis 5:1, bevorzugt 100 : 1 bis 20:1 ggf. in Gegenwart von Katalysatoren, die die Bildung von Isocyanuraten, Allophanaten und Urethanen beschleunigen, umsetzt,
(B2) die Katalysatoren gegebenenfalls desaktiviert und
(B3) gegebenenfalls nicht umgesetztes Isocyanat entfernt.

Abgesehen von der Tatsache, dass mehrwertige Alkohole (Alkohole A) eingesetzt werden, was die angegebene Anpassung des Molverhältnisses der Einsatzstoffe Alkohole A und Polyisocyanate C nach sich zieht, kann hier so vorgegangen werden, wie es in der EP-A-524501 beschrieben ist, insbesondere was die Katalyse, den Reaktionsabbruch und die Entfernung des überschüssigen Diisocyanats angeht.

Bei der Variante C werden vor ällem solche erfindungsgemäßen Mischungen gebildet, bei denen das Polyisocyanat A vorwiegend Biureteinheiten aufweist. Hierzu geht man so vor, dass man
(C1) Diisocyanate C, Alkohole A und ein Biuretisierungsmittel, wobei das molare Mischungsverhältnis von Diisocyanaten C zu A1-koholen A 200 : 1 bis 5:1, bevorzugt 100: 1 bis 20 : 1 und das molare Mischungsverhältnis von Diisocyanaten C zu dem Biuretisierungsmittel 200 : 1 bis 2:1, bevorzugt 100: 1 bis 4:1 beträgt, ggf. in Gegenwart von Katalysatoren, die die Bildung von Biureten, Allophanaten und Urethanen beschleunigen, umsetzt,
(C2) die Katalysatoren gegebenenfalls desaktiviert und
(C3) gegebenenfalls nicht umgesetztes Diisocyanat C entfernt.

In Schritt C1 geht man im allgemeinen so vor, dass man zunächst den Alkohol A und die gesamte Menge des Polyisocyanates C zusammenfügt und die Mischung auf Temperaturen von 100 bis 150°C erwärmt und wenige Minuten später das Biuretisierungsmittel ggf. den Katalysator, der die Bildung von Biureten, Allophanaten und Urethanen beschleunigt und ggf. einen in der EP-A-809663 beschriebenen Stabilisator hinzufügt und die Mischung ca. 2 bis 4 Stunden bei Temperaturen von 150 bis 200°C umsetzt. Die Schritte C2 und C3 erfolgen anschließend üblicherweise wie bei Varianten A und B beschrieben. Ansonsten gilt bezüglich der Herstellung der Mischung das gleiche wie bei der Herstellung der Polyisocyanate AII.

Die erfindungsgemäßen Mischungen können in Form von Zubereitungen in den Handel kommen, die neben den erfindungsgemäßen Mischungen
- sonstige von den Polyisocyanaten A und B verschiedene Isocyanate und
- sonstige in Zweikomponenten-Polyurethanlacken üblicherweise enthaltene Hilfsmittel enthalten.

Die erfindungsgemäßen Polyisocyanate beziehungsweise die erfindungsgemäßen Mischungen eignen sich insbesondere als B-Komponente bei der Herstellung von 2-Komponenten-Beschichtungsmassen, die als A-Komponente eine Verbindung, die mit Polyisocyanat reagierende Gruppen trägt, bevorzugt ein hydroxyfunktionelles Polymer (A), enthalten.

Bei den hydroxyfunktionellen Polymeren (A) handelt es sich z.B. um Polymere mit einem Gehalt an Hydroxylgruppen von 0,1 bis 20, vorzugsweise 0,5 bis 10 Gew.-%. Das zahlenmittlere Molekulargewicht Mₙ der Polymeren beträgt vorzugsweise 1000 bis 100 000, besonders bevorzugt 2000 bis 10 000. Bei den Polymeren handelt es sich bevorzugt um solche, welche zu mehr als 50 Gew.-% aus C₁- bis C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew.-% aus C₁- bis C₁₀-Alkyl-(meth)-acrylaten, Styrol oder deren Mischungen bestehen.

Darüber hinaus enthalten die Polymeren (A) hydroxyfunktionelle Monomere entsprechend dem obigen Hydroxylgruppengehalt und gegebenenfalls weitere Monomere, z.B. ethylenisch ungesättigte Säuren, insbesondere Carbonsäuren, Säureanhydride oder Säureamide.

Weitere Polymere (A) sind z.B. Polyesterole, wie sie durch Kondensation von Polycarbonsäuren, insbesondere Dicarbonsäuren, mit Polyolen, insbesondere Diolen, erhältlich sind.

Weiterhin sind als Polymere (A) auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Bei den Polymeren (A) kann es sich natürlich auch um Verbindungen mit primären oder sekundären Aminogruppen handeln.

Genannt seien z.B. sogenannte Jeffamine, d.h. mit Aminogruppen terminierte Polyetherole, oder Oxazolidine.

Neben den vorstehend aufgeführten A- und B-Komponenten können in den 2-Komponenten-Beschichtungsmittel weiterhin sonstige Polyisocyanate und Verbindungen mit gegenüber Polyisocyanaten reaktionsfähigen Gruppen enthalten sein, wie sie üblicherweise in Zweikomponenten-Beschichtungsmassen vorhanden sind.

Bevorzugt beträgt das molare Verhältnis, gebildet aus der Summe der Isocyanatgruppen in den B-Komponenten gegenüber der Summe der mit Isocyanatgruppen reaktiven Gruppen der Komponente (A), 0,6:1 bis 1,4:1, bevorzugt 0,7:1 bis 1,3:1, ganz besonders bevorzugt 1:1.

Die erfindungsgemäßen Beschichtungsmassen können weiterhin noch organische Lösemittel, z.B. Xylol, Butylacetat, Methylisobutylketon, Methoxypropylacetat, N-Methylpyrrolidon enthalten. Mit Lösemittel wird die zur Verarbeitung, d.h. zum Auftragen auf Substrate, gewünschte niedrige Viskosität der Beschichtungsmasse eingestellt.

Die Beschichtungsmassen können natürlich weitere, in der Beschichtungstechnologie übliche Zusatzstoffe, z.B. Pigmente, Füllstoffe, Verlaufshilfsmittel etc. enthalten.

Sie können weiterhin Katalysatoren für die Urethanbildung, z.B. Dibutylzinndilaurat, enthalten.

Die Herstellung der Zweikomponenten-Polyurethanbeschichtungsmittel kann in bekannter Weise erfolgen. Gewöhnlich werden die A- und die B-Komponente vor dem Auftrag der Beschichtungsmittel auf ein Substrat gemischt. Die Vermischung erfolgt üblicherweise 0 bis 12 h vor dem Auftrag. Mit Lösungsmittel kann die gewünschte Viskosität eingestellt werden.

Die Polyurethanbeschichtungsmittel können in üblicher Weise durch Spritzen, Gießen, Walzen, Streichen, Rakeln etc. auf Substrate flächig aufgebracht werden.

Die Beschichtungsmittel eignen sich insbesondere für Werkstücke mit Oberflächen aus Metall, Kunststoff, Holz, Holzwerkstoffen, Keramik oder Glas.

### Experimenteller Teil

### 1. Herstellung der Urethan- und Allophanatgruppen enthaltenden Polyisocyanurate aus HDI und verzweigten aliphatischen Diolen

2500g Hexamethylendiisocyanat (HDI) wurden unter Stickstoffbedeckung vorgelegt und auf 80°C erwärmt. Bei dieser Temperatur wurde die in Tabelle 1 angegebene Menge des Alkohols oder Alkoholgemisches zugegeben. Nach der homogenen Einmischung des Alkohols oder des Alkoholgemisches wurden 200 Gew. ppm (bezogen auf Diisocyanat) des Katalysators N,N,N-Trimethyl-N-(2-hydroxypropyl)ammonium-2-ethyl-hexanoat zugegeben. Nach Zugabe des Katalysators war eine deutliche Exothermie festzustellen und die Temperatur stieg auf 100 - 120°C. Man ließ bei dieser Temperatur reagieren und stoppte die Reaktion bei dem in Tabelle 1 angegebenen NCO-Gehalt der Mischung durch Zugabe von 250 Gew. ppm (bezogen auf Diisocyanat) Di-2-(Ethylhexyl)phosphat. Das Reaktionsgemisch wurde anschließend zur Entfernung vom monomeren HDI im Dünnschichtverdampfer bei 165°C Öltemperatur und 2.5 mbar destilliert. Daten zu den Endprodukten stehen in Tabelle 1.

**Tabelle 1:Modifizierte Polyisocyanurate**

| Polyisocyanat Nr. | Alkohol bzw. Alkoholmischung | Menge bez. Isocyanat (mol %) | NCO-Gehalt der Mischung (Gew.%) | NCO-Gehalt nach Destillation (Gew.%) | Viskosität bei 23°C (mPas) |
|---|---|---|---|---|---|
| 1 | Neopentylglykol | 2 | 40.0 | 21.2 | 2980 |
| 2 | Neopentylglykol | 3 | 36.4 | 20.1 | 4170 |
| 3 | 2,2,4-Trimethyl-1,3-pentandiol | 2 | 39.7 | 21.5 | 3020 |
| 4 | 2,2,4-Trimethyl-1,3-pentandiol | 5 | 35.7 | 20.1 | 6220 |
| 5 | 2-Ethyl-1,3-hexandiol | 2 | 40.1 | 21.0 | 3400 |
| 6 | Hydroxypivalin-säureneopentyl-glykolester | 2 | 38.5 | 20.8 | 4460 |
| 7 | Hydroxypivalin-säureneopentyl-glykolester/ 2-Ethylhexanol, 1:1 molar | 2 | 41.4 | 21.1 | 1850 |

### 2. Herstellung der Urethan- und Allophanatgruppen enthaltenden Polyisocyanurate aus HDI und verzweigten aliphatischen Monoalkoholen, Vergleichsversuche

2500g Hexamethylendiisocyanat (HDI) wurden unter Stickstoffbedeckung vorgelegt und auf 80°C erwärmt. Bei dieser Temperatur wurde die in Tabelle 2 angegebene Menge des Monoalkohols zugegeben. Nach der homogenen Einmischung des Alkohols wurden 200 Gew. ppm (bezogen auf Diisocyanat) des Katalysators N,N,N-Trimethyl-N-(2-hydroxypropyl) ammonium-2-ethyl-hexanoat zugegeben. Nach Zugabe des Katalysators war eine deutliche Exothermie festzustellen und die Temperatur stieg auf 100 - 120°C. Man läßt bei dieser Temperatur reagieren und stoppt die Reaktion bei dem in Tabelle 2 angegebenen NCO-Gehalt der Mischung durch Zugabe von 250 Gew. ppm (bezogen auf Diisocyanat) Di-2-(Ethylhexyl)phosphat. Das Reaktionsgemisch wurde anschließend zur Entfernung vom monomeren HDI im Dünnschichtverdampfer bei 165°C Öltemperatur und 2.5 mbar destilliert. Daten zu den Endprodukten stehen in Tabelle 2.

**Tabelle 2:Modifizierte Polyisocyanurate, Vergleichsversuche**

| Polyisocyanat Nr. | Alkohol | Menge bez. Isocyanat (mol %) | NCO-Gehalt der Mischung (Gew.%) | NCO-Gehalt nach Destillation (Gew.%) | Viskosität bei 23°C (mPas) |
|---|---|---|---|---|---|
| 8 (Vergleich) | Tert.Butanol | 2 | 40.9 | 21.9 | 1840 |
| 9 (Vergleich) | 2-Ethylhexanol | 2 | 36.8 | 21.1 | 2640 |

### 3. Herstellung eines Urethan- und Allophanatgruppen enthaltenden Polybiurets aus HDI und verzweigten aliphatischen Diolen

2500 g HDI, 125 g tert.-Butanol und 43.5 g 2,2,4-Trimethyl-1,3-pentandiol (2 mol% bzgl. HDI) wurden unter Stickstoffbedeckung vorgelegt und auf 130°C erwärmt. Bei dieser Temperatur wurden innerhalb von 2 min eine Mischung aus 15g tert. Butanol, 2.5 g dest. Wasser und 2.2 g Harnstoff zugegeben. Es erfolgte eine starke CO₂-Entwicklung. Nach dem Beenden der Gasentwicklung wurde das Reaktionsgemisch 3 h bei 180°C nachgerührt. Das Reaktionsgemisch wurde anschließend zur Entfernung vom monomeren HDI im Dünnschichtverdampfer bei 165°C Öltemperatur und 2.5 mbar destilliert. Das modifizierte Polybiuret wies eine Viskosität bei 23°C von 19300 mPas und einen NCO-Gehalt von 20.6 % auf.

### 4. Prüfung der Lagerstabilität der erfindungsgsmäßen Polyisocyanate

### 4.1. Prüfung der Lagerstabilität bei 23°C in Ethylacetat (Wassergehalt 0,1%), geschlossenes Gebinde

Die erfindungsgemässen Polyisocyanate und das Standard-Polyisocyanat Basonat® HI 100 (Vergleich, BASF AG) wurden mit Ethylacetat auf einen Festgehalt von 30% verdünnt und in verschlossenen Glasgebinden gelagert. Die Proben wurden im Tagesabstand visuell auf Trübung oder Flockung geprüft.

**Tabelle 3:**

| Lagerstabilität bei 23°C in Ethylacetat (Wassergehalt 0,1%), geschlossenes Gebinde | | | | | | |
|---|---|---|---|---|---|---|
| Lagerzeit | Basonat® HI 100 (Vgl.) | Erfindungsgemäße Polyisocyanate nach Tab. 1 | | | | |
| | | Nr.1 | Nr.2 | Nr.5 | Nr.6 | Nr.7 |
| 3 Tage | n.i.o. | i.o. | i.o. | i.o. | i.o. | i.o. |
| 21 Tage | | i.o. | i.o. | i.o. | i.o. | i.o. |

| | | | | | | |
|---|---|---|---|---|---|---|
| i.o. = Proben sind wie zum Abfüllzeitpunkt klar und transparent gelöst n.i.o. = Proben weisen Trübung / Flokkulation auf. | | | | | | |

### 3.2 Prüfung der Lagerstabilität in offenen Gebinden bei Normklima (23°C, 50% relative Luftfeuchte)

Die erfindungsgemässen Polyisocyanate, die Vergleichsprodukte und das Standard-Polyisocyanat Basonat® HI 100 (Vergleich, BASF AG) wurden mit Solventnaphta / Butylacetat 1:1 auf einen Festgehalt von 70% verdünnt und in offenen Gebinden gelagert. Im Tagesabstand wurde die Veränderung der Viskosität durch Bestimmung der Auslaufzeit nach DIN EN ISO 2431 (4mm-Auslaufdüse) bestimmt.

**Tabelle 3:Lagerstabilität in offenen Gebinden bei Normklima (23°C, 50% relative Luftfeuchte)**

| Lagerzeit | Auslaufzeit/s (DIN EN ISO 2431 mit 4 mm Düse) | | | | | | | | | |
|---|---|---|---|---|---|---|---|---|---|---|
| | Basonat® HI 100 (Vgl.) | Erfindungsgemäße Polyisocyanate nach Tab. 1 und Vergleichsprodukte nach Tab.2 | | | | | | | | |
| | | Nr.1 | Nr.2 | Nr.3 | Nr.4 | Nr.5 | Nr.6 | Nr.7 | Nr.8 (Vgl.) | Nr.9 (Vgl.) |
| Sofort | 17 | 17 | 19 | 17 | 20 | 19 | 19 | 17 | 17 | 18 |
| Geliert nach (d) | 12 | 21 | 21 | 21 | 21 | 21 | 21 | 21 | 13 | 12 |

Die erfindungsgemässen Polyisocyanate 1 bis 7 zeigten sowohl bei geöffneten Gebinden in Gegenwart von feuchter Luft als auch bei Verdünnung mit Wasser enthaltenden Lösemitteln eine im Vergleich zum Standard-Polyisocyanat und auch im Vergleich zu den mit Monoalkohol modifizierten Produkten nach Tabelle 2 deutlich verbesserte Lagerstabilitäten.

Die Prüfung der anwendungstechnischen Eigenschaften der erfindungsgemäßen Polyisocyanate in.Polyurethan-Lacksystemen zeigten im Vergleich zum Standard keine Unterschiede.

## Patentansprüche

1. Mischungen enthaltend
a) Polyisocyanate (Polyisocyanate A), enthaltend Struktureinheiten, ausgewählt aus der Gruppe Isocyanurat und Biuret, abgeleitet von aliphatischen oder cycloaliphatischen Diisocyanaten (Diisocyanate C)
b) von den Polyisocyanaten A verschiedene Polyisocyanate (Polyisocyanate B), enthaltend Struktureinheiten, ausgewählt aus der Gruppe Allophanat und Urethan, abgeleitet von
b1) aliphatischen oder cycloaliphatischen Diisocyanaten (Diisocyanate C) und
b2) mehrwertigen aliphatischen oder cycloaliphatischen Alkoholen (Alkohole A)
wobei das molare Verhältnis der Polyisocyanate A zu den Polyisocyanaten B 200: 1 bis 5:1 beträgt.

2. Mischungen nach Anspruch 1, wobei es sich bei den Polyisocyanaten A um solche handelt, die 1, 2 oder 3 Struktureinheiten, ausgewählt aus der Gruppe Isocyanurat und Biuret, enthalten.

3. Mischungen nach Anspruch 1 oder 2, wobei das Diisocyanat C ein solches der allgemeinen Formel (I) OCN-R¹-NCO ist und R¹ eine Alkylen- oder Cycloalkyleneinheit mit 4 bis 20 Kohlenstoffatomen ist.

4. Mischungen nach den Ansprüchen 1 bis 3, wobei es sich bei dem Diisocyanat C um Isophorondiisocyanat oder Hexamethylendiisocyanat handelt.

5. Mischungen nach den Ansprüchen 1 bis 4, wobei der Alkohol A ein solcher der allgemeinen Formel (II) HO-R²-OH ist und R² eine Alkylen- oder Cycloalkyleneinheit mit 2 bis 20 Kohlenstoffatomen ist, die ggf. durch Sauerstoffatome unterbrochen ist und bei der ggf. 1 bis 4 Wasserstoffatome durch C₁- bis C₁₂-Alkylreste substituiert sind.

6. Mischungen nach den Ansprüchen 3 bis 5, wobei das Polyisocyanat B ein solches der allgemeinen Formel (III) ist, 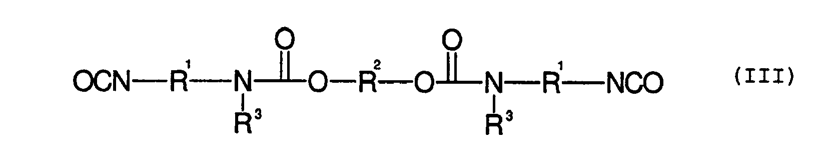 in der
R¹ die gleiche Bedeutung wie in der allgemeinen Formel I,
R² die gleiche Bedeutung wie in der allgemeinen Formel II,
R³ Wasserstoff oder ein Rest -CO-NH-R¹-NCO bedeutet, wobei R¹ die gleiche Bedeutung wie in der allgemeinen Formel I hat, mit der Maßgabe, dass mindestens ein Rest R³ nicht Wasserstoff bedeutet.

7. Zubereitungen nach den Ansprüchen 1 bis 6, enthaltend
- sonstige von den Polyisocyanaten A und B verschiedene Isocyanate und
- sonstige in Zweikomponenten-Polyurethanlacken üblicherweise enthaltene Hilfsmittel.

8. Verfahren zur Herstellung von Mischungen gemäß den Ansprüchen 1 bis 7, wobei man zunächst das Polyisocyanat B herstellt, indem man
(A1) Diisocyanate C und Alkohole A in einem molaren Mischungsverhältnis von 200 : 1 bis 5:1 ggf. in Gegenwart von Katalysatoren, die die Bildung von Allophanaten und Urethanen beschleunigen, umsetzt,
(A2) die Katalysatoren gegebenenfalls desaktiviert und
(A3)gegebenenfalls nicht umgesetztes Diisocyanat C entfernt
(A4) und das Polyisocyanat B anschließend mit einem Polyisocyanat A in den in Anspruch 1 angegebenen Mengenverhältnissen abmischt.

9. Verfahren zur Herstellung von Mischungen gemäß den Ansprüchen 1 bis 7, bei denen das Polyisocyanat A vorwiegend Isocyanurateinheiten aufweist, indem man
(B1)Diisocyanate C und Alkohole A in einem molaren Mischungsverhältnis von 200 : 1 bis 5:1 ggf. in Gegenwart von Katalysatoren, die die Bildung von Isocyanuraten, Allophanaten und Urethanen beschleunigen, umsetzt,
(B2) die Katalysatoren gegebenenfalls desaktiviert und
(B3) gegebenenfalls nicht umgesetztes Diisocyanat C entfernt.

10. Verfahren zur Herstellung von Mischungen gemäß den Ansprüchen 1 bis 7, bei denen das Polyisocyanat A vorwiegend Biureteinheiten aufweist, wobei man
(C1) Diisocyanate C, Alkohole A und ein Biuretisierungsmittel, wobei das molare Mischungsverhältnis von Diisocyanaten C zu Alkoholen A 200 : 1 bis 5:1 und das molare Mischungsverhältnis von Diisocyanaten C zu dem Biuretisierungsmittel 200 : 1 bis 2:1 beträgt, ggf. in Gegenwart von Katalysatoren, die die Bildung von Biureten, Allophanaten und Urethanen beschleunigen, umsetzt,
(C2) die Katalysatoren gegebenenfalls desaktiviert und
(C3)gegebenenfalls nicht umgesetztes Diisocyanat C entfernt.

11. Zwei-Komponenten-Beschichtungsmittel, enthaltend eine Verbindung, die mit Polyisocyanat reagierende Gruppen trägt (A-Komponente), sowie eine Mischung gemäß den Ansprüchen 1 bis 7 (B-Komponente).

12. Verfahren zum Beschichten von Gegenständen, **dadurch gekennzeichnet, daß** man
- eine Beschichtungszusammensetzung nach Anspruch 11 durch Vermischung der Komponenten (A) und (B) herstellt und
- die Beschichtungszusammensetzung innerhalb von 12 h nach deren Herstellung auf einen Gegenstand flächig aufträgt.

13. Beschichtete Gegenstände, hergestellt nach Anspruch 12.

## Claims

1. A mixture comprising
a) polyisocyanates (polyisocyanates A), comprising structural units selected from the isocyanurate and biuret group, derived from aliphatic or cycloaliphatic diisocyanates (diisocyanates C),
b) non-A polyisocyanates (polyisocyanates B), comprising structural units selected from the allophanate and urethane group, derived from
b1) aliphatic or cycloaliphatic diisocyanates (diisocyanates C) and
b2) polyhydric aliphatic or cycloaliphatic alcohols (alcohols A),
the molar ratio of the polyisocyanates A to the polyisocyanates B being from 200:1 to 5:1.

2. The mixture according to claim 1, wherein the polyisocyanates A comprise 1, 2 or 3 structural units selected from the isocyanurate and biuret group.

3. The mixture according to claim 1 or 2, wherein the diisocyanate C is of the formula (I) OCN-R¹-NCO and R¹ is an alkylene or cycloalkylene unit having 4 to 20 carbon atoms.

4. The mixture according to any of claims 1 to 3, wherein said diisocyanate C comprises isophorone diisocyanate or hexamethylene diisocyanate.

5. The mixture according to any of claims 1 to 4, wherein the alcohol A is of the formula (II) HO-R²-OH and R² is an alkylene or cycloalkylene unit having 2 to 20 carbon atoms which is uninterrupted or interrupted by oxygen atoms and in which, if desired, 1 to 4 carbon atoms are substituted by C₁ to C₁₂ alkyl radicals.

6. The mixture according to any of claims 3 to 5, wherein the polyisocyanate B is of the formula (III) 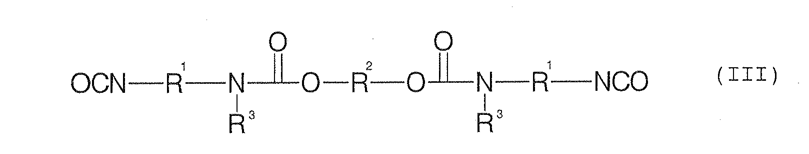 in which
R¹ is as defined for the formula I,
R² is as defined for the formula II, and
R³ is hydrogen or a radical -CO-NH-R¹-NCO, R¹ having the same definition as in the formula I, with the proviso that at least one radical R³ is not hydrogen.

7. A formulation according to any of claims 1 to 6, comprising
- isocyanates other than the polyisocyanates A and B, and
- other auxiliaries commonly present in two-component polyurethane coating materials.

8. A process for preparing a mixture according to any of claims 1 to 7, which comprises first preparing the polyisocyanate B by
(A1)reacting diisocyanates C and alcohols A in a molar ratio of from 200:1 to 5:1, in the presence or absence of catalysts which accelerate the formation of allophanates and urethanes,
(A2)deactivating the catalysts, if used,
(A3)removing any unreacted diisocyanate C, and
(A4)subsequently, mixing polyisocyanate B with a polyisocyanate A in the proportions specified in claim 1.

9. A process for preparing a mixture according to any of claims 1 to 7, in which the polyisocyanate A comprises predominantly isocyanurate units, which comprises
(B1)reacting diisocyanates C and alcohols A in a molar ratio of from 200:1 to 5:1, in the presence or absence of catalysts which accelerate the formation of isocyanurates, allophanates and urethanes,
(B2)deactivating the catalysts, if used, and
(B3)removing any unreacted diisocyanate C.

10. A process for preparing a mixture according to any of claims 1 to 7, in which the polyisocyanate A contains predominantly biuret units, which comprises
(C1)reacting diisocyanates C, alcohols A and a biuretizing agent, the molar ratio of diisocyanates C to alcohols A being from 200:1 to 5:1, and the molar ratio of diisocyanates C to the biuretizing agent being from 200:1 to 2:1, in the presence or absence of catalysts which acclerate the formation of biurets, allophanates and urethanes,
(C2)deactivating the catalysts, if used, and
(C3)removing any unreacted diisocyanate C.

11. A two-component coating composition comprising a compound which carries polyisocyanate-reactive groups (A component) plus a mixture according to any of claims 1 to 7 (B component).

12. A method of coating articles, which comprises
- preparing a coating composition according to claim 11 by mixing the components (A) and (B), and
- applying the coating composition two-dimensionally to an article within 12 h after its preparation.

13. A coated article produced according to claim 12.

## Revendications

1. Mélanges contenant
a) des polyisocyanates (polyisocyanates A), contenant des unités de structure choisies dans le groupe formé par isocyanurate et biuret, dérivés de diisocyanates aliphatiques ou cycloaliphatiques (diisocyanate C)
b) des polyisocyanates (polyisocyanates B) différents des polyisocyanates A, contenant des unités de structure choisies dans le groupe formé par allophanate et uréthane, dérivés de
b1) de diisocyanates aliphatiques ou cycloaliphatiques (diisocyanates C) et
b2) d'alcools polyvalents, aliphatiques ou cycloaliphatiques (alcools A)
le rapport molaire des polyisocyanates A aux polyisocyanates B étant de 200:1 à 5:1.

2. Mélanges selon la revendication 1, où il s'agit, pour les polyisocyanates A, de ceux qui contiennent 1, 2 ou 3 unités de structure choisies dans le groupe isocyanurate et biuret.

3. Mélanges selon la revendication 1 ou 2, où le diisocyanate C est un diisocyanate de formule générale (I) OCN-R¹-NCO et R¹ représente une unité alkylène ou cycloalkylène comprenant 4 à 20 atomes de carbone.

4. Mélanges selon les revendications 1 à 3, où il s'agit, pour le diisocyanate C d'isophoronediisocyanate ou d'hexaméthylènediisocyanate.

5. Mélanges selon les revendications 1 à 4, où l'alcool A est un alcool de formule générale (II) HO-R²-OH et R² représente une unité alkylène ou cycloalkylène comprenant 2 à 20 atomes de carbone, qui est le cas échéant interrompue par des atomes d'oxygène et dans laquelle le cas échéant 1 à 4 atomes de carbone sont substitués par des radicaux alkyle en C₁ à C₁₂.

6. Mélanges selon les revendications 3 à 5, où le polyisocyanate B est un polyisocyanate de formule générale (III), 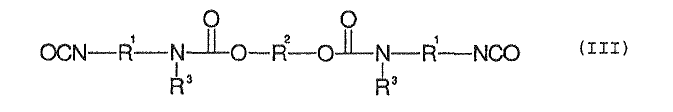 dans laquelle
R¹ a la même signification que dans la formule générale I,
R² a la même signification que dans la formule générale II,
R³ signifie hydrogène ou un radical -CO-NH-R¹-NCO, où R¹ a la même signification que dans la formule générale I, à condition qu'au moins un radical R³ ne signifie pas hydrogène.

7. Préparations selon les revendications 1 à 6, contenant
- d'autres isocyanates différents des polyisocyanates A et B et
- d'autres adjuvants usuellement contenus dans les laques de polyuréthane à deux composants.

8. Procédé pour la préparation de mélanges selon les revendications 1 à 7, où on prépare d'abord le polyisocyanate B, en ce qu'on
(A1) transforme des diisocyanates C et des alcools A dans un rapport de mélange molaire de 200:1 à 5:1 le cas échéant en présence de catalyseurs qui accélèrent la formation d'allophanates et d'uréthanes,
(A2) désactive le cas échéant les catalyseurs et
(A3) élimine le cas échéant le diisocyanate C non transformé
(A4) et mélange ensuite le polyisocyanate B avec un polyisocyanate A dans les rapports de mélange indiqués dans la revendication 1.

9. Procédé pour la préparation de mélanges selon les revendications 1 à 7, dans lesquels le polyisocyanate A présente principalement des unités isocyanurate, en ce qu'on
(B1) transforme des diisocyanates C et des alcools A dans un rapport de mélange molaire de 200:1 à 5:1 le cas échéant en présence de catalyseurs qui accélèrent la formation d'isocyanurates, d'allophanates et d'uréthanes,
(B2) désactive le cas échéant les catalyseurs et
(B3) élimine le cas échéant le diisocyanate C non transformé.

10. Procédé pour la préparation de mélanges selon les revendications 1 à 7, dans lesquels le polyisocyanate A présente principalement des unités biuret, où
(C1) on transforme des diisocyanates C, des alcools A et un agent de biurétisation, le rapport de mélange molaire de diisocyanates C à alcools A étant de 200:1 à 5:1 et le rapport de mélange molaire des diisocyanates C à l'agent de biurétisation étant de 200:1 à 2:1, le cas échéant en présence de catalyseurs qui accélèrent la formation de biurets, d'allophanates et d'uréthanes,
(C2) on désactive le cas échéant les catalyseurs et
(C3) on élimine le cas échéant le diisocyanate C non transformé.

11. Agent de revêtement à deux composants, contenant un composé, qui porte des groupes réagissant avec polyisocyanate (composant A), ainsi qu'un mélange selon les revendications 1 à 7 (composant B).

12. Procédé pour le revêtement d'objets, **caractérisé**
**en ce qu'**on
- prépare une composition de revêtement selon la revendication 1 par mélange des composants (A) et (B) et
- applique la composition de revêtement dans les 12 h après sa préparation sur un objet, sur toute sa surface.

13. Objets revêtus préparés selon la revendication 12.
